# EUROPEAN PATENT APPLICATION

(11) **EP 4 609 774 A1**
(43) Date of publication of application: **03.09.2025**
(21) Application number: 23881379.4
(22) Date of filing: 07.08.2023
(51) Int. Cl.: A47L 11/24

(54) **CLEANING METHOD AND APPARATUS FOR CLEANING ROBOT, AND MEDIUM AND ELECTRONIC DEVICE**

(30) Priority: 27.10.2022 CN 202211329625
(71) Applicant: Beijing Roborock Innovation Technology Co., Ltd., Beijing 102206 (CN)
(72) Inventor: LI, Yuxuan, Beijing 102206 (CN); HOU, Zhengtao, Beijing 102206 (CN); CONG, Yiming, Beijing 102206 (CN); LIU, Qing, Beijing 102206 (CN)
(74) Representative: Frick, Robert
(86) International application number: PCT/CN2023/111554
(87) International publication number: WO 2024/087793

(57) **Abstract**

Provided in the present disclosure are a cleaning method for a cleaning robot, a cleaning apparatus for a cleaning robot, and a computer-readable storage medium and an electronic device. The method comprises: when a rapid cleaning mode is triggered, determining whether an area map of an area to be cleaned has been stored in a cleaning robot; if the area map has been stored, determining whether daily route cleaning has been performed on the area to be cleaned, wherein the daily route cleaning is cleaning that is performed on a boundary area and an internal area of the area to be cleaned; and if the daily route cleaning has been performed, controlling the cleaning robot to perform cleaning according to the rapid cleaning mode, wherein the rapid cleaning mode is a mode in which cleaning is performed on the internal area of the area to be cleaned. The method meets the requirement for adjusting a cleaning route so as to improve the cleaning efficiency.

## Description

### CROSS-REFERENCE TO RELATED APPLICATIONS

The present application claims priority to Chinese Patent Application No. 202211329625.3, filed on October 27, 2022, which is incorporated herein by reference in its entirety.

### TECHNICAL FIELD

The present disclosure relates to the field of smart home, in particular to a cleaning method of a cleaning robot, a cleaning apparatus of the cleaning robot, a computer-readable storage medium and an electronic device.

### BACKGROUND ART

In recent years, with the rapid development of computer technologies and artificial intelligence science, intelligent robot technologies have gradually become a hot topic in the field of modern robot research. Cleaning robots, as one of the most practical type of intelligent robots, can automatically complete floor cleaning by means of certain artificial intelligence.

At present, the cleaning robots generally perform cleaning according to a fixed cleaning route during cleaning. Even if the cleaning route is adjusted, it only involves the adjustment of the cleaning intensity and a walking speed, etc., which cannot satisfy the demand of truly adjusting the cleaning route to improve the cleaning efficiency.

### SUMMARY OF THE INVENTION

An object of the present disclosure is to provide a cleaning method of a cleaning robot, a cleaning apparatus of the cleaning robot, a computer-readable storage medium and an electronic device to satisfy the demand of adjusting a cleaning route to improve the cleaning efficiency. Specific solutions are as follows.

According to specific embodiments of the present disclosure, in a first aspect, the present disclosure provides a cleaning method of a cleaning robot. The method includes: determining whether a region map of a region to be cleaned has been saved in the cleaning robot in a case where a rapid cleaning mode is triggered; determining whether the region to be cleaned has been subjected to daily route cleaning if the region map has been saved, wherein the daily route cleaning refers to cleaning of a boundary region and an internal region of the region to be cleaned; and controlling the cleaning robot to perform cleaning according to the rapid cleaning mode if the daily route cleaning has been performed, wherein the rapid cleaning mode is a mode in which the internal region of the region to be cleaned is cleaned.

In an exemplary embodiment of the present disclosure, the method further includes: controlling the cleaning robot to perform the daily route cleaning on the region to be cleaned if the region to be cleaned has not been subjected to the daily route cleaning.

In an exemplary embodiment of the present disclosure, the daily route cleaning includes: cleaning the boundary region of the region to be cleaned first, and then cleaning the internal region of the region to be cleaned.

In an exemplary embodiment of the present disclosure, the controlling the cleaning robot to perform cleaning according to the rapid cleaning mode includes: controlling the cleaning robot to directly clean the internal region of the region to be cleaned and avoiding an obstacle and a restricted region which are determined in the daily route cleaning process during cleaning.

In an exemplary embodiment of the present disclosure, the controlling the cleaning robot to perform cleaning according to the rapid cleaning mode includes: controlling the cleaning robot to clean only a sub-region specified by a user in the internal region of the region to be cleaned.

In an exemplary embodiment of the present disclosure, the method further includes: performing cleaning along an edge of a new obstacle if the new obstacle is discovered when the cleaning robot performs cleaning according to the rapid cleaning mode.

In an exemplary embodiment of the present disclosure, the method further includes: controlling the cleaning robot to construct the region map of the region to be cleaned if the cleaning robot does not save the region map of the region to be cleaned.

In a second aspect, the present disclosure provides a cleaning apparatus of a cleaning robot. The cleaning apparatus includes: a first determining module configured to determine whether a region map of a region to be cleaned has been saved in the cleaning robot in a case where a rapid cleaning mode is triggered; a second determining module configured to determine whether the region to be cleaned has been subjected to daily route cleaning if the region map has been saved, wherein the daily route cleaning refers to cleaning of a boundary region and an internal region of the region to be cleaned; and a cleaning module configured to control the cleaning robot to perform cleaning according to the rapid cleaning mode if the daily route cleaning has been performed, wherein the rapid cleaning mode is a mode in which the internal region of the region to be cleaned is cleaned.

In a third aspect, the present disclosure provides a non-transitory computer-readable storage medium, configured to store a computer program thereon, wherein the computer program, when executed by a processor, implements the cleaning method of the cleaning robot described above.

In a fourth aspect, the present disclosure provides an electronic device. The electronic device includes a processor; and a memory configured to store an executable instruction of the processor, wherein the processor is configured to execute the cleaning method of the cleaning robot described above by executing the executable instruction.

In the cleaning method of the cleaning robot provided by the exemplary embodiments of the present disclosure, in a case where a rapid cleaning mode of the cleaning robot is triggered, whether a region map of a region to be cleaned has been saved in the cleaning robot is determined first; whether the region to be cleaned has been subjected to daily route cleaning is determined if the region map has been saved, wherein the daily route cleaning refers to cleaning of a boundary region and an internal region of the region to be cleaned and can achieve thorough cleaning of the region to be cleaned; and the cleaning robot is controlled to perform cleaning according to the rapid cleaning mode if the daily route cleaning has been performed, wherein the rapid cleaning mode is a mode in which only the internal region of the region to be cleaned is cleaned. On the one hand, by controlling the region to be cleaned to enter the rapid cleaning mode in which only the internal region is cleaned, compared with the daily route cleaning, the rapid cleaning mode omits cleaning along an edge of the boundary region, which takes a relatively long time, and can effectively shorten the cleaning time and thus improve the cleaning efficiency. On the other hand, prior to entering the rapid cleaning mode, it is necessary to determine that the cleaning robot has performed the daily route cleaning from which region information such as a boundary and an obstacle of the region to be cleaned can be fully grasped, and thus risks such as trapping and falling off during cleaning can be reduced, thereby ensuring the safety during rapid cleaning.

### BRIEF DESCRIPTION OF THE DRAWINGS

The accompanying drawings, which are incorporated in and constitute a part of the description, illustrate embodiments consistent with the present disclosure and, together with the description, serve to explain the principles of the present disclosure. Apparently, the accompanying drawings in the following description show merely some embodiments of the present disclosure, and a person of ordinary skill in the art may still derive other drawings from these accompanying drawings without creative efforts. In the accompanying drawings:
FIG. 1 shows a flowchart of a cleaning method of a cleaning robot according to an exemplary embodiment of the present disclosure;
FIG. 2 shows a flowchart of steps of the cleaning method of the cleaning robot according to the exemplary embodiment of the present disclosure;
FIG. 3 shows a block diagram of a cleaning apparatus of a cleaning robot according to an embodiment of the present disclosure; and
FIG. 4 shows a schematic diagram of modules of an electronic device according to an embodiment the present disclosure.

### DETAILED DESCRIPTION

To make the objects, technical solutions and advantages of the present invention clearer, the present invention will be further described in detail below with reference to the accompanying drawings. It is obvious that the described embodiments are only part but not all of the embodiments of the present invention. All other embodiments obtained by those of ordinary skill in the art without creative efforts based on the embodiments in the present invention are within the protection scope of the present invention.

The terms used in the embodiments of the present invention are for the purpose of describing particular embodiments only and are not intended to limit the present invention. The singular forms "a/an", "said" and "the" used in the embodiments of the present invention and the appended claims are intended to include the plural forms as well, unless the context clearly indicates otherwise. The term "a plurality of" generally means at least two.

It should be understood that the term "and/or" used herein merely describes an association relationship of associated objects, and indicates that there may be three relationships. For example, A and/or B may indicate three cases: A exists separately, A and B exist at the same time, and B exists separately. In addition, the character "/" herein generally indicates an "or" relationship between the contextual objects.

It should be understood that although the terms first, second, third, etc. may be used to describe the embodiments of the present invention, such descriptions should not be limited to these terms. These terms are only used to distinguish one from the other. For example, the first may also be referred to as the second without departing from the scope of the embodiments of the present invention. Similarly, the second may also be referred to as the first.

Depending on the context, the word "if" as used herein may be interpreted as "when" or "in response to determining" or "in response to detecting". Similarly, depending on the context, the phrases "if it is determined that" or "if it is detected that (the stated condition or event)" may be interpreted as "when it is determined that" or "in response to determining" or "when it is detected that (the stated condition or event)" or "in response to detecting (the stated condition or event)".

It should also be noted that the terms "includes," "contains," or any other variants thereof are intended to cover the nonexclusive containing, such that the commodities or devices including a series of elements not only include those elements, but also include other unclearly listed elements, or also include the inherent elements of such commodities or devices. Without more limitations, the element defined by the phrase "including a ..." does not exclude the existence of other same elements in the commodity or device that including such element.

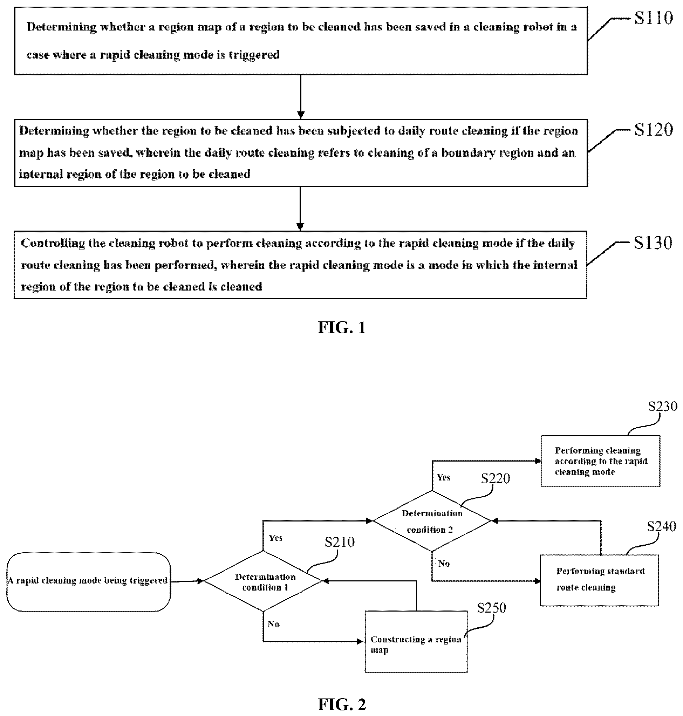

An exemplary embodiment of the present disclosure provides a cleaning method of a cleaning robot, which is applied to a case where the cleaning robot is controlled to perform cleaning according to different cleaning routes. Referring to FIG. 1, which shows a flowchart of a cleaning method of a cleaning robot according to an exemplary embodiment of the present disclosure, the cleaning method of the cleaning robot may include the following steps:
step S110, determining whether a region map of a region to be cleaned has been saved in the cleaning robot in a case where a rapid cleaning mode is triggered;
step S120, determining whether the region to be cleaned has been subjected to daily route cleaning if the region map has been saved, wherein the daily route cleaning refers to cleaning of a boundary region and an internal region of the region to be cleaned; and
step S130, controlling the cleaning robot to perform cleaning according to the rapid cleaning mode if the daily route cleaning has been performed, wherein the rapid cleaning mode is a mode in which the internal region of the region to be cleaned is cleaned.

In the cleaning method of the cleaning robot provided by the exemplary embodiments of the present disclosure, in a case where a rapid cleaning mode of the cleaning robot is triggered, whether a region map of a region to be cleaned has been saved in the cleaning robot is determined first; whether the region to be cleaned has been subjected to daily route cleaning is determined if the region map has been saved, wherein the daily route cleaning refers to cleaning of a boundary region and an internal region of the region to be cleaned and can achieve thorough cleaning of the region to be cleaned, and the boundary region may be a region covered when cleaning is performed along an edge of a wall, an obstacle, a restricted region or other regions; and the cleaning robot is controlled to perform cleaning according to the rapid cleaning mode if the region to be cleaned has been subjected to daily route cleaning, wherein the rapid cleaning mode is a mode in which only the internal region of the region to be cleaned is cleaned. On the one hand, by controlling the region to be cleaned to enter the rapid cleaning mode in which only the internal region is cleaned, compared with the daily route cleaning, the rapid cleaning mode omits cleaning along an edge of the boundary region, which takes a relatively long time, and can effectively shorten the cleaning time and thus improve the cleaning efficiency. On the other hand, prior to entering the rapid cleaning mode, it is necessary to determine that the cleaning robot has performed the daily route cleaning from which region information such as a boundary and an obstacle of the region to be cleaned can be fully grasped, and thus risks such as trapping and falling off during cleaning can be reduced, thereby ensuring the safety during rapid cleaning.

The cleaning method of the cleaning robot provided by the exemplary embodiment of the present disclosure can be applied to a case that a user feels that the home environment is less dirty and there is no need to perform full-range cleaning, and in that case, only can the internal region of the region to be cleaned be cleaned by triggering the rapid cleaning mode by the user, thereby improving the cleaning efficiency and satisfying the diverse demands of the user.

Specific embodiments are listed below to describe various steps of the cleaning method of the cleaning robot provided by the exemplary embodiment of the present disclosure in detail.

In step S110, whether a region map of a region to be cleaned has been saved in the cleaning robot is determined in a case where a rapid cleaning mode is triggered.

In the exemplary embodiment of the present disclosure, cleaning of the cleaning robot includes daily route cleaning and rapid cleaning. In order to facilitate the user to operate the cleaning robot through a client side, an application (APP, application) for controlling the cleaning robot is usually installed on the client side, and the user can control a cleaning mode, a cleaning route, cleaning intensity, etc. of the cleaning robot through the application.

For example, in a process of controlling the cleaning route, a plurality of cleaning routes is displayed usually, such as a daily cleaning route and a rapid cleaning route which correspond to the embodiments of the present disclosure. The daily cleaning route here corresponds to a mode in which the boundary region and the internal region of the region to be cleaned are cleaned, while the rapid cleaning route represents a cleaning route in the rapid cleaning mode in the exemplary embodiment of the present disclosure, i.e., a route that only the internal region is cleaned.

In the cleaning method of the cleaning robot provided by the exemplary embodiment of the present disclosure, whether the region map of the region to be cleaned has been saved in the cleaning robot is determined first after the user triggers the rapid cleaning mode.

Usually, when entering the region to be cleaned for the first time, the cleaning robot activates a map construction mode to construct the region map of the region to be cleaned. A region map construction method includes but is not limited to the following method: a SLAM (simultaneous localization and mapping, simultaneous localization and mapping) simultaneous localization and mapping module is used to locate the cleaning robot and simultaneously construct a map of the region where the cleaning robot is located, the cleaning robot is equipped with a laser emitter which emits lasers, the lasers are reflected when they encounter an obstacle, and the SLAM module constructs the region map based on the emitted and reflected lasers. It should be noted that all existing methods that can be used to construct the region map corresponding to the cleaning robot in the present embodiment are included in the protection scope of the present disclosure.

After constructing the region map, the cleaning robot stores the region map for later cleaning or locating.

In an exemplary embodiment of the present disclosure, whether the region map of the region to be cleaned has been saved in the cleaning robot is determined to ensure that the cleaning robot can directly clean the region to be cleaned.

In practical applications, if the user triggers the rapid cleaning mode and determines that the cleaning robot does not save the region map of the region to be cleaned, at this time, the cleaning robot needs to be controlled to enter the map construction mode first, the cleaning robot is controlled to construct the region map of the region to be cleaned according to the above region map construction method, and the subsequent determination is made after the region map is constructed.

It should be noted that the region to be cleaned may be a region selected by the user on the APP on the client side, or a region where the user places the cleaning robot. If the region to be cleaned is the region where the user places the cleaning robot, the cleaning robot needs to activate a locating mode to locate the region where it is currently located, determine a specific location, and then determine whether there is a region map of that location stored therein.

In step S120, whether the region to be cleaned has been subjected to daily route cleaning is determined if the region map has been saved, wherein the daily route cleaning refers to cleaning of a boundary region and an internal region of the region to be cleaned.

In the exemplary embodiment of the present disclosure, on the basis of S110 above, if it is determined that the region map of the region to be cleaned has been saved in the cleaning robot, it is necessary to further determine whether the region to be cleaned has been subjected to daily route cleaning. Determining whether daily route cleaning has been performed may be determining whether the cleaning robot has performed daily route cleaning within a preset period of time, for example, determining whether the region to be cleaned has been subjected to daily route cleaning within a week or within a preset time period of other lengths, which is not specially limited in the exemplary embodiment of the present disclosure.

In practical applications, the daily route cleaning is cleaning of both the boundary region and the internal region of the region to be cleaned, and belongs to a mode in which thorough cleaning is performed on the region to be cleaned. For example, it may be a mode in which the boundary region of the region to be cleaned is cleaned first, that is, cleaning is performed along an edge of the region to be cleaned, and then the internal region of the region to be cleaned is cleaned. In the process of cleaning the internal region of the region to be cleaned, cleaning may be performed according to a Z-shaped route or other forms of routes, which is not specially limited in the exemplary embodiment of the present disclosure.

In the exemplary embodiment of the present disclosure, if it is determined that the region to be cleaned has not been subjected to the daily route cleaning, the cleaning robot may be controlled to perform daily route cleaning. The cleaning robot performs subsequent steps after performing the daily route cleaning.

The daily route cleaning includes cleaning along an edge, during which a safety boundary of the region to be cleaned is determined. In addition, during the daily route cleaning, the obstacle, the restricted region and the like in the region to be cleaned may also be determined. Thus, data such as wall-following data, obstacle avoidance data and restricted region avoidance data may be determined. These data may be applied directly to the rapid cleaning, thereby further improving the efficiency and accuracy in the rapid cleaning process.

In step S130, the cleaning robot is controlled to perform cleaning according to the rapid cleaning mode if the daily route cleaning has been performed, wherein the rapid cleaning mode is a mode in which the internal region of the region to be cleaned is cleaned.

In the exemplary embodiment of the present disclosure, if it is determined that the daily route cleaning has been performed on the region to be cleaned, the cleaning robot may be controlled to perform cleaning according to the rapid cleaning mode, wherein the rapid cleaning mode is a mode in which the internal region of the region to be cleaned is cleaned.

The internal region of the region to be cleaned may be cleaned in a plurality of different forms. For example, direct cleaning, rather than cleaning along an edge, may be performed on the internal region of the region to be cleaned, and the obstacle, the restricted region and the like that are determined in the daily route cleaning process are avoided during cleaning, that is, avoidance is performed according to the above data such as the wall-following data, the obstacle avoidance data and the restricted region avoidance data. Thus, the cleaning efficiency is improved while the cleaning area is reduced.

The cleaning robot may also be controlled to clean only a sub-region specified by the user in the internal region of the region to be cleaned, that is, to clean a partial region of the internal region. In actual applications, the user's client will display the region map of the region to be cleaned, and at this time, the user can circle the sub-region he/she wants to clean by hand-drawing or using self-selected graphics, and then the cleaning robot performs rapid cleaning according to the sub-region circled by the user. The user can also determine the specified sub-region of the region to be cleaned by selecting one or more regions from the region to be cleaned. By specifying the sub-region for cleaning, diverse demands of the user can be satisfied, and only parts that the user wants to clean are cleaned, thereby improving the user experience.

It should be noted that the sub-region needs to be a sub-region in the internal region of the region to be cleaned, and if the user circles the outside of the region to be cleaned in the process of circling the sub-region, the client can prompt the user that the circling range is incorrect and needs to be re-circled. In this way, the situation that the sub-region being outside the region to be cleaned brings uncertainty to the cleaning process of the cleaning robot is avoided, thereby avoiding the risk of trapping or falling off, etc.

In practical applications, if the cleaning robot discovers a new obstacle when performing cleaning according to the rapid cleaning mode, it is necessary to control the cleaning robot to perform cleaning along an edge of the new obstacle, and record information along the edge, which may be added to the region map for use in future cleaning.

Referring to FIG. 2, which shows a flowchart of steps of the cleaning method of the cleaning robot according to the exemplary embodiment of the present disclosure. In FIG. 2, in a case where the rapid cleaning mode is triggered, it proceeds to step S210, i.e., a determination condition 1, determining whether a region map of a region to be cleaned has been saved in the cleaning robot; if so, that is, the region map of the region to be cleaned has been saved, it proceeds to step S220, i.e., a determination condition 2, determining whether the region to be cleaned has been subjected to daily route cleaning; if so, that is, the daily route cleaning has been performed, it proceeds to step S230, controlling the cleaning robot to perform cleaning according to the rapid cleaning mode; if not, that is, the daily route cleaning is not performed, it proceeds to step S240, controlling the cleaning robot to perform daily route cleaning; and after the daily route cleaning is completed, it proceeds to S220 to continue to make a determination according to the determination condition 2.

If the cleaning robot does not save the region map of the region to be cleaned, it proceeds to S250, controlling the cleaning robot to construct the region map of the region to be cleaned; and after the region map is constructed, it proceeds to S210 to continue to make a determination according to the determination condition 1.

According to the cleaning method of the cleaning robot provided by the exemplary embodiment of the present disclosure, before the cleaning robot is controlled to perform rapid cleaning, a determination is performed on the two conditions, that is, whether the region map of the region to be cleaned has been saved, and whether the daily route cleaning has been performed to provide the necessary basis for rapid cleaning, so that in the process of rapid cleaning, obstacles can be avoided according to the previous cleaning information, such as information of the obstacle and the restricted region on the region map. Thus, on the basis of cleaning only the internal region, the cleaning efficiency is further improved, and the rapid cleaning is more convenient and efficient, thereby satisfying more diverse demands of the user.

It should be noted that the above method is not only applied to cleaning robots with dry cleaning apparatuses and wet cleaning modules, but can also be applied to sweeping robots with only dry cleaning apparatuses, or mopping robots with only wet cleaning modules, etc., which is not limited in the exemplary embodiments of the present disclosure.

It should be noted that although the steps of the method of the present disclosure are described in a specific order in the drawings, this does not require or imply that these steps must be performed in this specific order, or that all of the steps shown must be performed in order to achieve the desired result. Additionally or alternatively, some steps may be omitted, multiple steps may be combined into one step for execution, and/or one step may be decomposed into multiple steps for execution, and the like.

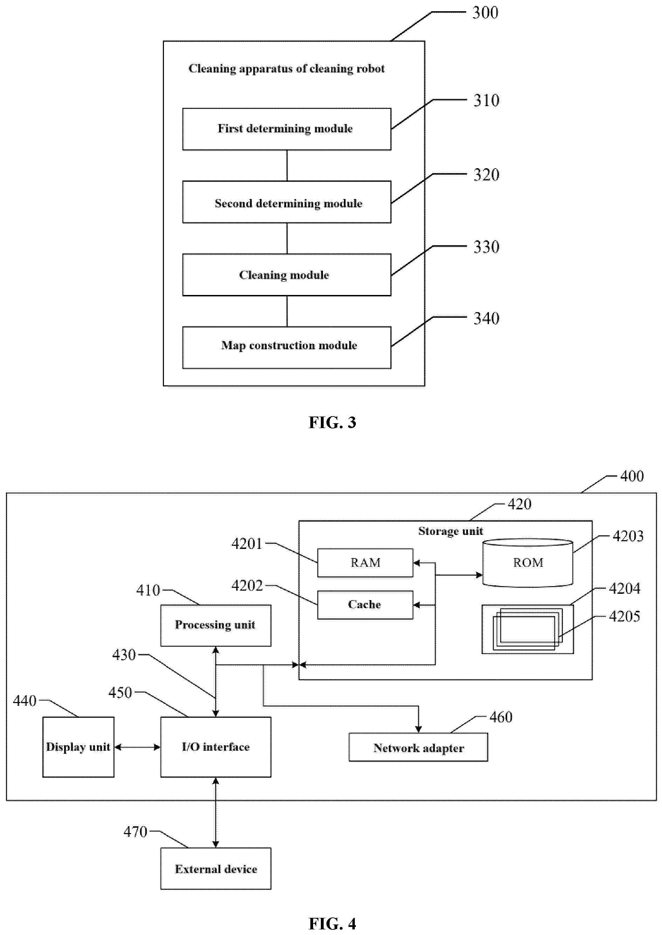

In an exemplary embodiment of the present disclosure, a cleaning apparatus of a cleaning robot is further provided. As shown in FIG. 3, the cleaning apparatus 300 of the cleaning robot may include a first determining module 310, a second determining module 320, a cleaning module 330, and a map construction module 340, wherein
the first determining module 310 is configured to determine whether a region map of a region to be cleaned has been saved in the cleaning robot in a case where a rapid cleaning mode is triggered;
the second determining module 320 is configured to determine whether the region to be cleaned has been subjected to daily route cleaning if the region map has been saved, wherein the daily route cleaning refers to cleaning of a boundary region and an internal region of the region to be cleaned; and
the cleaning module 330 is configured to control the cleaning robot to perform cleaning according to the rapid cleaning mode if the daily route cleaning has been performed, wherein the rapid cleaning mode is a mode in which the internal region of the region to be cleaned is cleaned.

In an exemplary embodiment of the present disclosure, the cleaning module 330 may also be configured to control the cleaning robot to perform the daily route cleaning on the region to be cleaned if the region to be cleaned has not been subjected to the daily route cleaning.

In an exemplary embodiment of the present disclosure, the daily route cleaning includes: cleaning the boundary region of the region to be cleaned first, and then cleaning the internal region of the region to be cleaned.

In an exemplary embodiment of the present disclosure, the cleaning module 330 may also be configured to control the cleaning robot to directly clean the internal region of the region to be cleaned and avoid an obstacle and a restricted region, which are determined in a daily route cleaning process during cleaning.

In an exemplary embodiment of the present disclosure, the cleaning module 330 may also be configured to control the cleaning robot to clean only a sub-region specified by a user in the internal region of the region to be cleaned.

In an exemplary embodiment of the present disclosure, the cleaning module 330 may also be configured to perform cleaning along an edge of a new obstacle if the new obstacle is discovered when the cleaning robot performs cleaning according to the rapid cleaning mode.

In an exemplary embodiment of the present disclosure, the map construction module 340 may be configured to control the cleaning robot to construct the region map of the region to be cleaned if the cleaning robot does not save the region map of the region to be cleaned.

The specific details of respective modules of the cleaning apparatus for the cleaning robot mentioned above have been described in detail in the corresponding cleaning method for the cleaning robot, and thus are not repeated here.

It should be noted that although several modules or units of the device for execution are mentioned in the above detailed descriptions, this division is not mandatory. In fact, according to the embodiments of the present disclosure, the features and functions of two or more modules or units described above may be embodied in one module or unit. On the contrary, the features and functions of one module or unit described above may be further divided and embodied by multiple modules or units.

In an exemplary embodiment of the present disclosure, an electronic device capable of implementing the above method is also provided. For example, the electronic device may be a cleaning robot capable of realizing the above methods.

Those skilled in the art can understand that various aspects of the present invention can be implemented as systems, methods or program products. Therefore, various aspects of the present invention can be implemented as hardware only, software (including firmware, microcode, etc.) only, or a combination of hardware and software, which can be collectively referred to as "circuit", "module" or "system" here.

An electronic device 400 according to the embodiment of the present disclosure is described below with reference to FIG. 4. The electronic device 400 shown in FIG. 4 is merely an example and should not impose any limitations on the functionality or scope of use of embodiments of the present disclosure.

As shown in FIG. 4, the electronic device 400 is represented in the form of a general-purpose computing device. Components of the electronic device 400 may include, but are not limited to, at least one processing unit 410 described above, at least one storage unit 420 described above, a bus 430 connecting different system components including the storage unit 420 and the processing unit 410, and a display unit 440.

The storage unit 420 stores program codes executable by the processing unit 410, such that the processing unit 410 performs the steps according to various exemplary embodiments of the present disclosure described in the above-mentioned "exemplary method" section of the Description. For example, the processing unit 410 may execute steps S110 to S130 as shown in FIG. 1: step S110-determining whether a region map of a region to be cleaned has been saved in the cleaning robot in a case where a rapid cleaning mode is triggered; step S120-determining whether the region to be cleaned has been subjected to daily route cleaning if the region map has been saved, wherein the daily route cleaning refers to cleaning of a boundary region and an internal region of the region to be cleaned; and step S130-controlling the cleaning robot to perform cleaning according to the rapid cleaning mode if the daily route cleaning has been performed, wherein the rapid cleaning mode is a mode in which the internal region of the region to be cleaned is cleaned.

The storage unit 420 may include a readable medium in the form of a volatile storage unit, such as a random access memory (RAM) 4201 and/or a cache storage unit 4202, and may further include a read-only memory (ROM) 4203.

The storage unit 420 may further include a program/utility 4204 with a set of (at least one) program modules 4205. Such program modules 4205 include, but are not limited to, an operating system, one or more application programs, other program modules and program data, and each or some combinations of these examples may include the implementation of a network environment.

The bus 430 may represent one or more of several types of bus structures, including a memory cell bus or a memory cell controller, a peripheral bus, an accelerated graphics port, a processing unit, or a local bus using any of a variety of bus structures.

The electronic device 400 may also communicate with at least one external device 470 (such as a keyboard, a pointing device, a Bluetooth device, etc.), and may also communicate with at least one device that enable(s) a user to interact with the electronic device 400, and/or communicate with any device (such as a router, a modem, etc.) that enables the electronic device 400 to communicate with at least one other computing device. This communication may be performed via an input/output (I/O) interface 450. In addition, the electronic device 400 may also communicate with at least one network (for example, a local area network (LAN), a wide area network, WAN) and/or a public network, such as the Internet) via a network adapter 960. As shown in the figure, the network adapter 460 communicates with other modules of the electronic device 400 via the bus 430. It should be understood that although not shown in the figure, other hardware and/or software modules may be used in conjunction with the electronic device 400, including but not limited to: microcode, device drivers, redundant processing units, external disk drive arrays, and redundant arrays of independent disks (RAID) systems, tape drives, and data backup storage systems.

Through the descriptions of the above embodiments, it is easy for those skilled in the art to understand that the exemplary embodiments described herein can be realized by software or a combination of software and necessary hardware. Therefore, the technical solution according to the embodiment of the present disclosure can be embodied in the form of a software product. The software product can be stored in a non-volatile storage medium (a CD-ROM, a USB disk, a mobile hard disk, etc.) or on the network, and includes several instructions to make a computing device (which may be a personal computer, a server, a terminal apparatus, a network device, or the like) execute the method according to the embodiment of the present disclosure.

In an exemplary embodiment of the present disclosure, there is further provided a computer-readable storage medium having stored thereon a program product capable of implementing the above-described method of the present Description. In some possible embodiments, aspects of the present disclosure may also be implemented in the form of a program product including program codes which, when the program product runs on a terminal apparatus, cause the terminal apparatus to execute the steps according to various exemplary embodiments of the present disclosure described in the above "Exemplary Method" section of the present Description.

A program product for implementing the above method according to an embodiment of the present disclosure may be in form of a portable compact disk read-only memory (CD-ROM) and include program codes, and may run on a terminal apparatus such as a personal computer. However, the program product of the present disclosure is not limited thereto, and in this document, the readable storage medium may be any tangible medium which contains or stores a program, and the program may be used by or in combination with an instruction execution system, means, or a device.

The program product may be any combination of one or more readable media. The readable medium may be a readable signal medium or a readable storage medium. The readable storage medium may be, for example, but not limited to, an electrical, magnetic, optical, electromagnetic, infrared, or semiconductor system, means or device, or any combination of the above. More specific examples (a non-exhaustive list) of the readable storage medium may include: an electrical connection with one or more wires, a portable disk, a hard disk, a random-access memory (RAM), a read-only memory (ROM), an erasable programmable read-only memory (EPROM or a flash memory), an optical disc, a portable compact disk read-only memory (CD-ROM), an optical storage device, a magnetic storage device, or any suitable combination of the above.

The computer-readable signal medium may include a data signal propagated in a baseband or as part of a carrier wave, and readable program codes are carried in the data signal. This propagated data signal may be in many forms, including but not limited to an electromagnetic signal, an optical signal, or any suitable combination of the above. The readable signal medium may also be any readable medium other than the readable storage medium, and the readable medium may send, propagate, or transmit the program for use by or in combination with an instruction execution system, means, or device.

The program code contained on the readable medium may be transmitted by any suitable medium, including, but not limited to: wireless, wired lines, optical cables, RF, etc., or any suitable combination of the above.

The program code for executing the operations of the present disclosure may be written in one programming language or any combination of a plurality of programming languages. The above programming languages include object-oriented programming languages, such as Java and C++, and also include conventional procedural programming languages, such as "C" language or similar programming languages. The program codes may execute entirely on a user computing apparatus, partly on the user computing apparatus, as an independent software package, partly on the user computing apparatus and partly on a remote computing apparatus, or entirely on the remote computing apparatus or a server. In the case of the remote computing apparatus, the remote computing apparatus may be connected to the user computing apparatus through any type of network, including the local area network (LAN) or wide area network (WAN), or may be connected to an external computing apparatus (for example, via the Internet using an internet service provider).

In addition, the above drawings are merely schematic illustrations of the processing included in the method according to the exemplary embodiment of the present disclosure, and are not for limiting purposes. It is easy to understand that the processing shown in the above figures do not indicate or limit the time sequence of these processing. In addition, it is also easy to understand that these processing can be performed synchronously or asynchronously in multiple modules, for example.

Other embodiments of the present disclosure will be apparent to those skilled in the art from consideration of the description and practice of the content disclosed herein. The present disclosure is intended to cover any variations, uses, or adaptations of the present disclosure following the general principles thereof and including common knowledge or commonly used technical measures which are not disclosed herein. The description and the embodiments are to be considered as exemplary only, with a true scope and spirit of the present disclosure indicated by the claims.

It should be appreciated that the present disclosure is not limited to the exact construction that has been described above and illustrated in the accompanying drawings, and that various modifications and changes can be made without departing from the scope of the present disclosure. It is intended that the scope of the present disclosure is only limited by the appended claims.

## Claims

1. A cleaning method of a cleaning robot, comprising:
determining whether a region map of a region to be cleaned has been saved in the cleaning robot in a case where a rapid cleaning mode is triggered;
determining whether the region to be cleaned has been subjected to daily route cleaning if the region map has been saved, wherein the daily route cleaning refers to cleaning of a boundary region and an internal region of the region to be cleaned; and
controlling the cleaning robot to perform cleaning according to the rapid cleaning mode if the daily route cleaning has been performed, wherein the rapid cleaning mode is a mode in which the internal region of the region to be cleaned is cleaned.

2. The method according to claim 1, further comprising:
controlling the cleaning robot to perform the daily route cleaning on the region to be cleaned if the region to be cleaned has not been subjected to the daily route cleaning.

3. The method according to claim 1 or 2, wherein the daily route cleaning comprises: cleaning the boundary region of the region to be cleaned first, and then cleaning the internal region of the region to be cleaned.

4. The method according to any one of claims 1 to 3, wherein controlling the cleaning robot to perform cleaning according to the rapid cleaning mode comprises:
controlling the cleaning robot to directly clean the internal region of the region to be cleaned, and avoiding an obstacle and a restricted region which are determined in the daily route cleaning process during cleaning.

5. The method according to any one of claims 1 to 4, wherein controlling the cleaning robot to perform cleaning according to the rapid cleaning mode comprises:
controlling the cleaning robot to clean only a sub-region specified by a user in the internal region of the region to be cleaned.

6. The method according to claim 4 or 5, further comprising:
performing cleaning along an edge of a new obstacle if the new obstacle is discovered when the cleaning robot performs cleaning according to the rapid cleaning mode.

7. The method according to any one of claims 1 to 6, further comprising:
controlling the cleaning robot to construct the region map of the region to be cleaned if the cleaning robot does not save the region map of the region to be cleaned.

8. A cleaning apparatus of a cleaning robot, comprising:
a first determining module configured to determine whether a region map of a region to be cleaned has been saved in the cleaning robot in a case where a rapid cleaning mode is triggered;
a second determining module configured to determine whether the region to be cleaned has been subjected to daily route cleaning if the region map has been saved, wherein the daily route cleaning refers to cleaning of a boundary region and an internal region of the region to be cleaned, and
a cleaning module configured to control the cleaning robot to perform cleaning according to the rapid cleaning mode if the daily route cleaning has been performed, wherein the rapid cleaning mode is a mode in which the internal region of the region to be cleaned is cleaned.

9. The cleaning apparatus of the cleaning robot according to claim 8, wherein
the cleaning module is also configured to control the cleaning robot to perform the daily route cleaning on the region to be cleaned if the region to be cleaned has not been subjected to the daily route cleaning.

10. The cleaning apparatus of the cleaning robot according to claim 8 or 9, wherein the daily route cleaning comprises: cleaning the boundary region of the region to be cleaned first, and then cleaning the internal region of the region to be cleaned.

11. The cleaning apparatus of the cleaning robot according to any one of claims 8 to 10, wherein controlling the cleaning robot to perform cleaning according to the rapid cleaning mode comprises:
controlling the cleaning robot to directly clean the internal region of the region to be cleaned, and avoiding an obstacle and a restricted region which are determined in the daily route cleaning process during cleaning.

12. The cleaning apparatus of the cleaning robot according to any one of claims 8 to 11, wherein controlling the cleaning robot to perform cleaning according to the rapid cleaning mode comprises:
controlling the cleaning robot to clean only a sub-region specified by a user in the internal region of the region to be cleaned.

13. The cleaning apparatus of the cleaning robot according to claim 11 or 12, wherein
the cleaning module is also configured to perform cleaning along an edge of a new obstacle if the new obstacle is discovered when the cleaning robot performs cleaning according to the rapid cleaning mode.

14. The cleaning apparatus of the cleaning robot according to any one of claims 8 to 13, wherein
the cleaning module is also configured to control the cleaning robot to construct the region map of the region to be cleaned if the cleaning robot does not save the region map of the region to be cleaned.

15. A non-transitory computer-readable storage medium, configured to store a computer program thereon, wherein the computer program, when executed by a processor, implements the cleaning method of the cleaning robot according to any one of claims 1 to 7.

16. An electronic device, comprising:
a processor; and
a memory configured to store an executable instruction of the processor,
wherein the processor is configured to execute the cleaning method of the cleaning robot according to any one of claims 1 to 7 by executing the executable instruction.
